# FASCICULE DE BREVET EUROPEEN

(11) **EP 0 658 286 B1**
(45) Date de publication et mention de la délivrance du brevet: **05.02.1997**
(21) Numéro de dépôt: 94921688.1
(22) Date de dépôt: 06.07.1994
(51) Int. Cl.: H01R 35/02, F16H 27/08, B60R 16/02, G06M 1/14

(54) **CONTACTEUR TOURNANT, NOTAMMENT POUR VEHICULE AUTOMOBILE**
DREHKONTAKTOR INSBESONDERE FÜR KRAFTFAHRZEUGE
ROTARY SWITCH, PARTICULARLY FOR MOTOR VEHICLES

(30) Priorité: 06.07.1993 FR 9308287
(43) Date de publication de la demande: 21.06.1995
(73) Titulaire: VALEO ELECTRONIQUE, 94000 Creteil (FR)
(72) Inventeur: LAGIER, Daniel, F-92000 Nanterre (FR)
(74) Mandataire: Gamonal, Didier
(86) Numéro de dépôt international: FR9400830
(87) Numéro de publication internationale: WO9502263

(56) Documents cités:
- EP-A- 0 479 567
- DE-C- 4 002 318
- RESEARCH DISCLOSURE, vol.242, no.46, Juin 1984, HAVANT HAMPSHIRE,GREAT-BRITAIN page 296 B.JOHNSON ET AL 'Roll limiting device'

## Description

La présente invention concerne les contacteurs tournants, notamment pour véhicule automobile, du genre comportant deux parties coaxiales montées mobiles en rotation l'une par rapport à l'autre à l'encontre de moyens souples de liaison électrique, tel que des moyens souples de transmission de signaux, comportant un ruban enroulé en spirale entre lesdites parties.

Par exemple, l'une des parties peut être mobile en rotation en étant liée au volant de direction du véhicule automobile, tandis que l'autre partie est fixe en étant associée à la colonne de direction.

Les moyens souples de liaison électrique sont enroulés en spirale, à la manière d'un ressort de montre. Ces moyens permettent d'assurer des liaisons électriques notamment de transmettre des signaux, tels que des signaux électriques, entre un ou des premiers dispositifs liés au volant du véhicule et un ou des seconds dispositifs liés à la colonne de direction ou au châssis du véhicule.

Les premiers dispositifs peuvent consister par exemple en des commutateurs électriques, tels que l'avertisseur sonore, ou en un dispositif de sécurité à coussin gonflable dénommé "Air Bag", qui se gonfle en cas d'accident pour protéger le conducteur.

De tels contacteurs tournants sont décrits par exemple dans les documents EP-A-0 479 567, EP-A-0 479 578 ainsi que dans le document FR-A-2 703 522 publié le 7 octobre 1994.

Lesdits moyens souples peuvent comporter par exemple un ruban, sous forme de pistes électriquement conductrices en cuivre placées sur un film polyester recouvert d'un isolant dit "coverlay". En variante le ruban peut comporter un ou plusieurs fils conducteurs souples parallèles et isolés entre eux.

Enfin, comme décrit dans le document FR-A-2 703 522, le ruban peut être fractionné en deux tronçons avec intervention d'une pièce de couplage, les tronçons consistant chacun en une bande électriquement conductrice enroulée en spirale.

Dans tous les cas, il est possible d'effectuer 1,75 à 3,5 tours de volant dans un sens et dans l'autre.

Ce contacteur tournant est fabriqué par un équipementier et est livré au constructeur automobile dans sa position moyenne ou centrale.

Pour ce faire, l'une des parties du contacteur étant rotative par rapport à l'autre, le maintien de la partie rotative est assuré soit par des moyens mécaniques faisant appel usuellement à une vis de blocage, soit le plus souvent par l'intermédiaire d'une étiquette adhésive qui se coupe lors de la première rotation du volant. Ainsi le contacteur est monté dans la bonne position et l'on ne risque pas de détériorer le ruban.

Il n'en va pas de même lorsque, suite à une réparation du véhicule par exemple dans un garage, l'on intervient sur le contacteur tournant.

En effet, il peut être nécessaire de démonter ce contacteur puis de le remonter.

Il se pose alors un problème car lors du remontage il faut que le contacteur soit monté dans sa position moyenne ou centrale.

Pour ce faire l'étiquette adhésive précitée comporte les instructions nécessaires pour le recentrage du contacteur tournant après un démontage. En pratique on enroule le contacteur tournant jusqu'à l'une de ses positions extrêmes, puis l'on déroule celui-ci en comptant le nombre de tours.

Lors de cette manoeuvre on peut blesser le ruban, notamment lorsque l'on tourne le ruban dans le mauvais sens, celui-ci ayant la possibilité de se retourner et de se plier. En outre cette méthode n'est pas très précise.

La présente invention a pour objet de pallier ces inconvénients et donc de retrouver lors d'un remontage, de manière simple, la position moyenne du contacteur sans effectuer de mauvaises manoeuvres et enrouler le ruban dans le mauvais sens.

Suivant l'invention un contacteur tournant du type sus-indiqué est caractérisé en ce qu'une desdites parties porte une roue menante axialement étagée, tandis que l'autre desdites parties porte, pour coopération avec la roue menante, une roue menée axialement étagée, en ce qu'un premier étage de la roue menante a une forme tubulaire interrompue localement par un ergot saillant radialement, tandis qu'un premier étage de la roue menée comporte des dents de contact propres à être entraînées par ledit ergot, en ce qu'un deuxième étage de la roue menante a une forme tubulaire interrompue localement par un évidement de dégagement, tandis qu'un deuxième étage de la roue menée comporte des dents de blocage propres à coopérer avec le deuxième étage de la roue menante et à pénétrer chacune dans ledit évidement de dégagement pour déverrouillage de la roue menée.

Ainsi il est créé un dispositif compteur de tours et de blocage permettant de retrouver aisément en toute sécurité, de manière précise et rapidement la position moyenne du contacteur tournant.

En effet, grâce aux dents de blocage, la roue menée est bloquée en rotation tant que l'une des dents de blocage ne vient pas en regard de l'évidement de dégagement.

Dès que ladite dent pénètre dans l'évidement de dégagement, la roue menée peut tourner et l'ergot de la roue menante peut engrener avec une dent de contact et faire tourner la roue menée.

Ainsi par exemple en faisant un repère sur la roue menante et sur la roue menée, on peut amener lesdits repères en face l'un de l'autre et retrouver la position centrale.

On appréciera que le nombre de pièces est minimal et que ces pièces sont simples et robustes. En particulier, la roue menante a une forme extrêmement simple avec deux parties tubulaires de taille différente interrompues respectivement par l'ergot et l'évidement.

De préférence l'ergot est en regard de l'évidement de dégagement. Ainsi la fabrication de la roue menante est aisée et la précision du dispositif selon l'invention est meilleure.

Avantageusement les dents de contact sont décalées circonférentiellement par rapport aux dents de blocage. Grâce à cette disposition, on évite tout arc-boutement. Ainsi les pièces en mouvement ne sont pas fragiles.

Suivant une autre caractéristique, pour éviter tout retournement du câble, la roue menée comporte un secteur circulaire de blocage.

Ainsi, lorsque ce secteur circulaire vient en regard du premier étage de la roue menante, l'ergot vient buter contre la roue menée et toute poursuite du mouvement devient impossible.

La description qui va suivre illustre l'invention en regard des dessins annexés dans lesquels :
- la figure 1 est une demi-vue en coupe axiale d'un contacteur tournant de l'art antérieur ;
- la figure 2 est une vue en perspective d'un boîtier de l'art antérieur ;
- la figure 3 est une vue de dessus d'un dispositif compteur de tours et de blocage selon l'invention ;
- la figure 4 est une vue en coupe selon la ligne 4-4 de la figure 3 ;
- la figure 5 est une vue en perspective du dispositif compteur de tours selon l'invention.

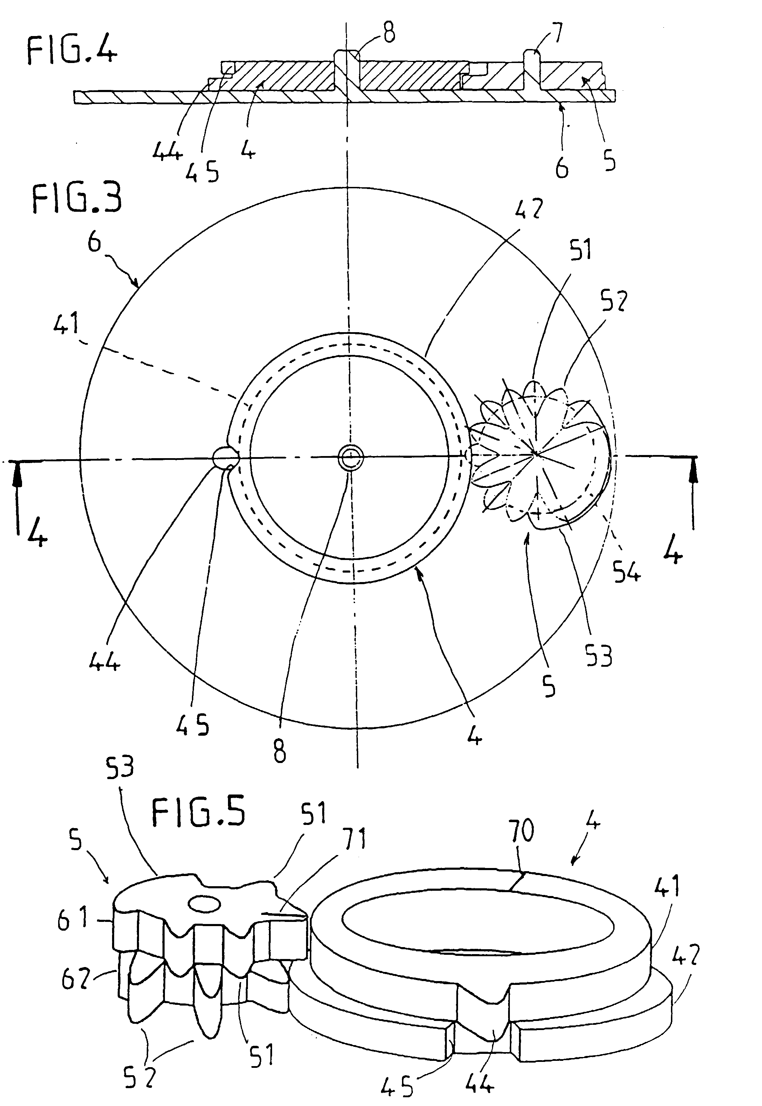

Dans les figures 4 à 5 est illustré un dispositif compteur de tours et de blocage, pour la sécurité de mise en place d'un contacteur tournant à moyens souples de transmission de liaison électrique à ruban pour véhicule automobile, implanté au niveau du volant dudit véhicule.

Ce contacteur tournant permet par exemple de commander un dispositif de sécurité à coussin gonflable.

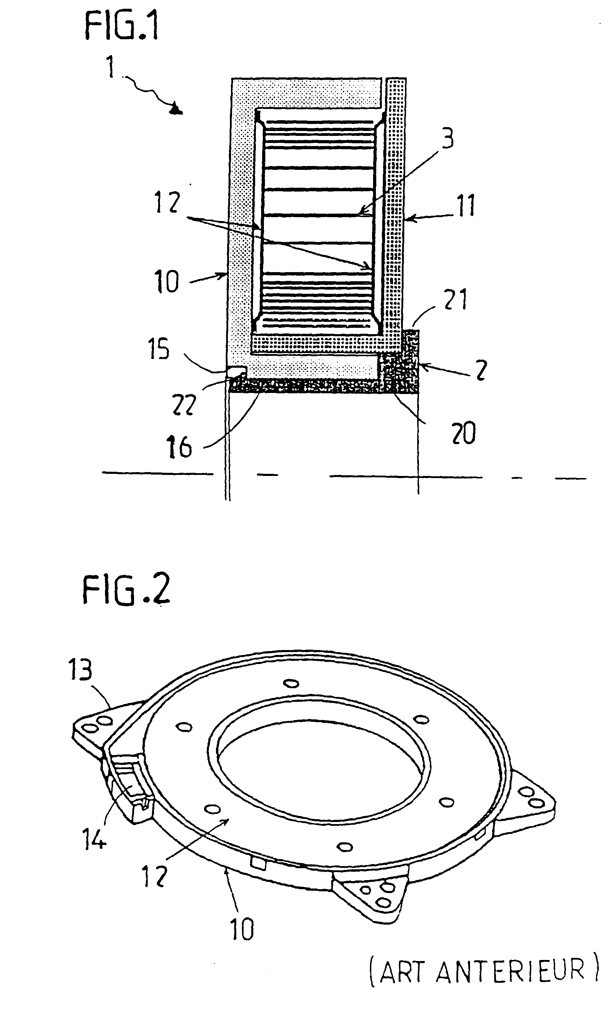

Ainsi qu'on le sait et tel que décrit dans les documents précités EP-A-0 479 567, EP-A-0 479 568 et FR-A-2 703 522, un tel contacteur tournant comporte (figures 1 et 2) deux parties coaxiales 1,2 montées mobiles en rotation l'une par rapport à l'autre à l'encontre de moyens souples de liaison électrique 3 comportant un ruban enroulé en spirale entre lesdites parties 1 et 2.

Ce ruban 3 peut comporter plusieurs pistes, par exemple en cuivre, placées sur un film polyester et recouvert d'un isolant dit "coverlay".

En variante il peut s'agir d'un câble, de section ronde ou plane, comprenant un ou différents fils électriquement conducteurs souples parallèles et isolés entre eux.

En variante comme décrit dans le susmentionné document FR-A-2 703 522, le ruban 3 peut être fractionné en deux portions avec intervention d'une pièce de couplage entre celles-ci et comporter deux bandes de matériau conducteur, par exemple en cuivre, enroulées en spirale.

Usuellement l'une 2 des parties 1,2 comporte un moyeu 20 monté tourillonnant à l'intérieur d'un alésage central 16, que comporte l'autre partie 1. Cette partie 1 comporte elle-même deux parties 10,11 à l'intérieur desquelles est confiné le ruban 3.

Par exemple, dans les figures 1 et 2, la première partie 1 comporte un boîtier creux 10, à section en forme de U, recouvert par un couvercle 11, à section en forme de L inversé.

Le moyeu 20 présente une collerette étagée 21, pour son calage axial, respectivement par rapport au couvercle 11, dont la partie centrale annulaire pénètre à l'intérieur du boîtier 10, et à la partie centrale tubulaire du boîtier 10.

Dans l'autre sens ce moyeu 20 est calé axialement par rapport au boîtier 10 par encliquetage, le moyeu 20 présentant des dents 22 coopérant avec le fond d'une ou de plusieurs échancrures 15 prévues à cet effet dans le fond du boîtier 10.

Avantageusement le moyeu 20, le boîtier 10 et le couvercle 11 sont en matière plastique, le couvercle 11 étant avantageusement en matière plastique transparente.

Le boîtier 10 présente une portion 14 pour attelage de l'une des extrémités du ruban 3 au boîtier 10 et réalisation des connexions électriques.

Ce boîtier 10 comporte également des oreilles 13 pour fixation du couvercle 11, présentant également des oreilles complémentaires aux oreilles 13, et fixation de l'ensemble sur une partie fixe du véhicule.

Le moyeu 20 présente également une portion, non visible, pour attelage de l'autre extrémité du ruban 3 au moyeu 20.

Avantageusement le couvercle 11 et le boîtier 10 portent des bandes 12 de protection pour éviter que le ruban ne s'incruste dans le couvercle 11 et dans le boîtier 10.

Ainsi il est possible d'enrouler et de dérouler le ruban lorsque l'on manoeuvre le volant, le nombre de tours que l'on peut effectuer étant usuellement de 1,75 à 3,5 tours.

Il importe donc de repérer la position moyenne ou centrale du ruban 3 lorsque, après un démontage du contacteur tournant, on effectue un remontage de celui-ci par exemple dans un garage.

En effet si l'on ne remonte pas le contacteur dans sa position moyenne, on ne peut pas effectuer correctement le nombre de tours de volant requis, le ruban 3 se détériorant alors rapidement mettant hors service le commutateur tournant sans que cela soit perçu par le conducteur.

Pour résoudre ce problème, l'invention propose de doter le contacteur tournant un dispositif compteur de tours et de blocage 4,5. Plus précisément, un contacteur tournant du type sus-indiqué est caractérisé en ce qu'une desdites parties 1,2 porte une roue menante 4 axialement étagée, tandis que l'autre desdites parties 2,1 porte, pour coopération avec la roue menante 4, une roue menée 5 axialement étagée, en ce qu'un premier étage 41 de la roue menante 4 a une forme tubulaire interrompue localement par un ergot 44 saillant radialement, tandis qu'un premier étage 61 de la roue menée 5 comporte des dents de contact 51 propres à être entraînées par ledit ergot 44, en ce qu'un deuxième étage 42 de la roue menante 4 a une forme tubulaire interrompue localement par un évidement de dégagement 45, tandis qu'un deuxième étage 62 de la roue menée 5 comporte des dents de blocage 52 propres à coopérer avec le deuxième étage 42 de la roue menante 4 et à pénétrer dans ledit évidement de dégagement 45 pour déverrouillage de la roue menée 5.

Ici, pour réduction des bruits facilité de fabrication et réduction des inerties, les roues menante 4 et menée 5 sont avantageusement en matière plastique et les dents 51,52 ont une forme légèrement bombée et donc peu agressive. L'étagement axial de la roue 4 résulte d'un changement de diamètre.

Ainsi le premier 41 et le deuxième étage 42 ont une forme tubulaire interrompue localement par respectivement l'ergot 44 et l'évidement 45 disposé en regard de l'ergot 44. La tranche - ou périphérie externe - de chacun des étages 41,42 forme donc une piste externe circulaire. Ces pistes on * des diamètres différent, celle associée à l'ergot 44 ayant un diamètre inférieure à celle associée à l'évidement 45.

Le premier étage 61 de la roue menée 5 forme une roue dentée de contact, tandis que le deuxième étage 62 de la roue menée forme une roue dentée de blocage.

Les dents 51 de la roue dentée de contact 61 sont décalées circonférentiellement par rapport aux dents 52 de la roue de blocage 62. Ici l'évidement de dégagement 45 est en regard de l'ergot 44 et les dents 51 font saillie radialement par rapport aux dents 52.

La roue 61 présente un secteur circulaire 53 d'extrémité. Il en est de même de la roue 62, ceci pour des raisons de simplification de la fabrication.

Bien entendu la partie d'extrémité de la roue 62 peut être creuse. Ces roues 61,62 présentant donc des secteurs dentés.

Les dents 51 sont propres à venir en contact avec l'ergot 44, tandis que deux dents 52 sont propres à venir en contact avec le deuxième étage (la piste) 42 de la roue menante 4.

Comme visible à la figure 5 un léger jeu existe entre le premier étage (la piste) 41 de la roue menante 4 et les dents 51 de la roue menée 5. Deux dents 52 sont par contre en contact glissant avec le deuxième étage 42 de la roue menante 4.

Ainsi tant que l'une des dents 52 n'est pas en regard de l'évidement de dégagement 45, il est impossible de faire tourner la roue 5. Par contre la roue menante 4 peut tourner, la piste du deuxième étage 42 glissant le long des deux dents 52. Avantageusement, on choisit pour les roues 4,5 de la matière plastique à faible coefficient de frottement. Lorsque la dent concernée 52 vient en regard de l'évidement 45, il est alors possible de faire tourner la roue 5, l'ergot 44 engrenant avec l'une des dents 51 pour l'entraîner en rotation, tandis que la dent 52 précitée pénètre alors de préférence à léger jeu circonférentiel dans l'évidement 45. La roue menée 5 peut alors tourner de la valeur d'une dent.

On choisit avantageusement le décalage circonférentiel entre les dents 51,52 en sorte que l'ergot 44 vient attaquer les dents 51 perpendiculairement à l'axe passant par les centres de rotation des roues menante 4 et menée 5 pour diminution des efforts.

En faisant un repère sur la roue menante 4 et sur la roue menée 5, par exemple un simple trait 70 sur la roue menante 4 et un trait 71 sur l'une des dents 51 (la dent médiane), on peut, en n'effectuant un certain nombre de tours, amener en coïncidence les deux traits 70,71, ce qui permet d'amener la roue menante 4 en position moyenne. En variante les traits peuvent être remplacés par des chiffres, par exemple un zéro. En variante on peut prévoir des systèmes optiques plus onéreux.

Grâce à cet agencement, on peut compter le nombre de tours et en même temps bloquer la roue menée 5.

Ainsi ce dispositif 4,5 ne perturbe pas le fonctionnement du commutateur après remontage de celui-ci.

On appréciera que le secteur circulaire 53, par coopération avec la piste du premier étage 41, permet un blocage de la roue menante 4. L'ergot 44 venant buter contre l'une des extrémités du secteur 53.

Ainsi on ne risque pas de retourner le ruban et de le blesser car on ne peut aller au-delà d'une position extrême lors du remontage.

Ici, pour des raisons de simplicité et de démonstration, on a représenté dans les figures 3 et 4, le montage des roues 4 et 5 sur un disque 6 portant à cet effet un axe 7 pour montage rotatif de la roue menée 5 et un axe 8 pour montage rotatif de la roue menante 4, les axes 7 et 8 étant décalés axialement.

Ainsi qu'on l'aura compris, le disque 6 peut être le couvercle 11 de la figure 1 et la roue menante 4 peut consister à une prolongation de la collerette 21 de la figure 1, la présence de l'axe 8 n'étant pas nécessaire.

Bien entendu le disque 6 peut être rapporté sur la face externe du couvercle 11 et porter, grâce à son axe 7, la roue menée 5, la roue menante 4 étant solidaire de la collerette 21 ou entraînée par celle-ci.

Bien entendu on peut inverser les structures, la collerette 21 portant la roue menée 5 à la faveur de l'axe 7, tandis que le couvercle 11 porte la roue menante 4.

En effet lorsque le commutateur est démonté, on peut faire tourner manuellement l'ensemble boîtier 10, couvercle 11 par rapport au moyeu 20.

On peut monter le dispositif compteur de tours et de blocage 4,5 à l'intérieur de la cavité délimitée par le boîtier 10 et le couvercle 11, ou sur le boîtier 10.

Toutes les dispositions étant envisageables. En particulier dans le document FR-A-2 703 522, on peut monter la roue menée 5 sur l'une des demi-coquilles et prolonger le moyeu afin que celui-ci porte centralement la roue menante.

Bien entendu le nombre de dents 51 dépend des applications et donc du nombre de tours à effectuer, ici 2,5 tours, dans un sens et dans l'autre. Les dents 51 et 52 ont ici une pointe globalement arrondie, pour que notamment les dents 52 puissent glisser le long de la piste circulaire 42.

Ainsi qu'il ressort à l'évidence de la description et des dessins, la taille des dents 52 est adaptée à la taille de l'évidement 45 et la distance entre deux dents consécutives 51 est fonction de la taille de l'ergot 44, ici en forme de V à pointe globalement arrondie. Cet ergot 44 est à l'image des dents 51.

Bien entendu lorsque le couvercle 11 ou le boîtier 10, ou la pièce 6 ne sont pas en matière transparente, il faut faire des lumières dans ces pièces, éventuellement bouchées par des parties transparentes, pour visualiser la position des roues 4 et 5.

Bien entendu les dents 51,52 peuvent ne pas être décalées circonférentiellement mais cela est moins favorable car la roue menée risque de se coincer.

En variante les dents 51,52 peuvent être alignées et dans ce cas il faut élargir circonférentiellement l'évidement de dégagement. Contrairement au mode de réalisation de la figure 5, la dent 52 pénètre à jeu circonférentiel important dans l'évidement 45 au détriment de la précision.

## Revendications

1. Contacteur tournant, notamment pour véhicule automobile, du genre comportant deux parties coaxiales (1,2) montées mobiles en rotation l'une par rapport à l'autre à l'encontre de moyens souples de transmission de liaison électrique (3) comportant un ruban enroulé en spirale entre lesdites parties (1,2), caractérisé en ce qu'une desdites parties (1,2) porte une roue menante (4) axialement étagée, tandis que l'autre desdites parties (2,1) porte, pour coopération avec la roue menante (4), une roue menée (5) axialement étagée, en ce qu'un premier étage (41) de la roue menante (4) a une forme tubulaire interrompue localement par un ergot (44) saillant radialement, tandis qu'un premier étage (61) de la roue menée (5) comporte des dents de contact (51) propres à être entraînées par ledit ergot (44), en ce qu'un deuxième étage (42) de la roue menante (4) a une forme tubulaire interrompue localement par un évidement de dégagement (45), tandis qu'un deuxième étage (62) de la roue menée (5) comporte des dents de blocage (52) propres à coopérer avec le deuxième étage (42) de la roue menante (4) et à pénétrer dans ledit évidement de dégagement (45) pour déverrouillage de la roue menée.

2. Contacteur tournant selon la revendication 1, caractérisé en ce que les dents de blocage (52) sont décalées circonférentiellement par rapport aux dents de contact (51).

3. Contacteur tournant selon la revendication 1 ou 2, caractérisé en ce que de par leur forme tubulaire le premier étage (41) et le second étage (42) de la roue menante (4) forment chacun à leur périphérie externe une piste externe circulaire et en ce que lesdites pistes ont des diamètres différents, celle associée à l'ergot (44) ayant un diamètre inférieur à celle associée à l'évidement (45).

4. Contacteur tournant selon la revendication 3, caractérisé en ce que les dents de contact (51) font saillie radialement par rapport aux dents de blocage (52).

5. contacteur tournant selon l'une quelconque des revendications 1 à 4, caractérisé en ce qu'un léger jeu existe entre les dents de contact (51) et le premier étage (41) de forme tubulaire de la roue menante (4), tandis que les dents de blocage (52) sont en contact glissant avec le deuxième étage (42) de forme tubulaire de la roue menante (4).

6. Contacteur tournant selon l'une quelconque des revendications 1 à 5, caractérisé en ce que le premier étage (61) de la roue menée (5) présente un secteur circulaire de blocage (53) propre à coopérer avec le premier étage (41) de la roue menante (4).

7. Contacteur tournant selon la revendication 6, caractérisé en ce que le deuxième étage (62) de la roue menée (5) présente également un secteur circulaire d'extrémité.

8. Contacteur tournant selon l'une quelconque des revendications 1 à 7 caractérisé en ce que l'ergot (44) est en regard de l'évidement de dégagement (45).

## Patentansprüche

1. Drehkontaktor, insbesondere für Kraftfahrzeuge, bestehend aus zwei koaxialen Teilen (1, 2), die im Verhältnis zueinander drehbeweglich entgegen biegsamen Übertragungsmitteln für eine elektrische Verbindung (3) gelagert sind, die ein spiralförmig gewickeltes Band zwischen den besagten Teilen (1,2) umfassen, **dadurch gekennzeichnet,** daß einer der besagten Teile (1, 2) ein axial abgestuftes treibendes Rad (4) trägt, während der andere der besagten Teile (2, 1) zum Zusammenwirken mit dem treibenden Rad (4) ein axial abgestuftes getriebenes Rad (5) trägt, daß eine erste Stufe (41) des treibenden Rads (4) eine Rohrform aufweist, die örtlich durch eine radial vorspringende Nase (44) unterbrochen wird, während eine erste Stufe (61) des getriebenen Rads (5) Kontaktzähne (51) umfaßt, die durch die besagte Nase (44) mitgenommen werden können, daß eine zweite Stufe (42) des treibenden Rads (4) eine Rohrform aufweist, die örtlich durch eine Freigabeaussparung (45) unterbrochen wird, während eine zweite Stufe (62) des getriebenen Rads (5) Sperrzähne (52) umfaßt, die mit der zweiten Stufe (42) des treibenden Rads (4) zusammenwirken und in die besagte Freigabeaussparung (45) eingreifen können, um das getriebene Rad (5) freizugeben.

2. Drehkontaktor nach Anspruch 1, **dadurch gekennzeichnet,** daß die Sperrzähne (52) im Verhältnis zu den Kontaktzähnen (51) umfangsmäßig versetzt sind.

3. Drehkontaktor nach Anspruch 1 oder 2, **dadurch gekennzeichnet,** daß die erste Stufe (41) und die zweite Stufe (42) des treibenden Rads (4) durch ihre Rohrform jeweils an ihrem Außenumfang eine kreisförmige äußere Bahn bilden und daß die besagten Bahnen unterschiedliche Durchmesser aufweisen, wobei die zur Nase (44) gehörende Bahn einen kleineren Durchmesser als die zur Aussparung (45) gehörende Bahn besitzt.

4. Drehkontaktor nach Anspruch 3, **dadurch gekennzeichnet,** daß die Kontaktzähne (51) im Verhältnis zu den Sperrzähnen (52) radial vorstehen.

5. Drehkontaktor nach einem der Ansprüche 1 bis 4, **dadurch gekennzeichnet,** daß ein geringes Spiel zwischen den Kontaktzähnen (51) und der rohrförmigen ersten Stufe (41) des treibenden Rads (4) besteht, während die Sperrzähne (52) in Gleitkontakt mit der rohrförmigen zweiten Stufe (42) des treibenden Rads (4) stehen.

6. Drehkontaktor nach einem der Ansprüche 1 bis 5, **dadurch gekennzeichnet,** daß die erste Stufe (61) des getriebenen Rads (5) einen Sperrkreissektor (53) aufweist, der mit der ersten Stufe (41) des treibenden Rads (4) zusammenwirken kann.

7. Drehkontaktor nach Anspruch 6, **dadurch gekennzeichnet,** daß die zweite Stufe (62) des getriebenen Rads (5) ebenfalls einen endseitigen Kreissektor aufweist.

8. Drehkontaktor nach einem der Ansprüche 1 bis 7, **dadurch gekennzeichnet,** daß sich die Nase (44) gegenüber der Freigabeaussparung (45) befindet.

## Claims

1. A rotary contactor, especially for a motor vehicle, of the kind comprising two coaxial parts (1, 2) which are mounted for rotation with respect to each other against the action of flexible transmission means for electrical connection (3) which comprise a ribbon spiral-wound between the said parts (1, 2), characterised in that one of the said parts (1, 2) carries an axially stepped driving wheel (4), while the other one of the said parts (2, 1) carries, for cooperation with the driving wheel (4), an axially stepped driven wheel (5), in that a first stage (41) of the driving wheel (4) has a tubular form which is interrupted locally by a radially projecting lug (44), while a first stage (61) of the driven wheel (5) has contact teeth (51) which are adapted to be driven by the said lug (44), in that a second stage (42) of the driving wheel (4) has a tubular form which is interrupted locally by a relieving recess (45), while a second stage (62) of the driven wheel (5) has stop teeth (52) which are adapted to cooperate with the second stage (42) of the driving wheel (4) and to penetrate into the said relieving recess (45), so as to unlock the driven wheel.

2. A rotary contactor according to Claim 1, characterised in that the stop teeth (52) are offset circumferentially with respect to the contact teeth (51).

3. A rotary contactor according to Claim 1 or Claim 2, characterised in that, by virtue of their tubular form, the first stage (41) and the second stage (42) of the driving wheel (4) each defines a circular outer track at its outer periphery, and in that the said tracks are of different diameters, the one which is associated with the lug (44) having a smaller diameter than the one associated with the recess (45).

4. A rotary contactor according to Claim 3, characterised in that the contact teeth (51) project radially with respect to the stop teeth (52).

5. A rotary contactor according to any one of Claims 1 to 4, characterised in that there is a slight clearance between the contact teeth (51) and the tubular first stage (41) of the driving wheel (4), while the stop teeth (52) are in sliding contact with the tubular second stage (42) of the driving wheel (4).

6. A rotary contactor according to any one of Claims 1 to 5, characterised in that the first stage (41) of the driven wheel (5) has a circular stop sector (53) which is adapted to cooperate the first stage (41) of the driving wheel (4).

7. A rotary contactor according to Claim 6, characterised in that the second stage (62) of the driven wheel (5) further includes a circular terminal sector.

8. A rotary contactor according to any one of Claims 1 to 7, characterised in that the lug (44) is aligned with the relieving recess (45).
